# EUROPÄISCHE PATENTSCHRIFT

(11) **EP 1 453 378 B1**
(45) Veröffentlichungstag und Bekanntmachung des Hinweises auf die Patenterteilung: **23.08.2006**
(21) Anmeldenummer: 02792759.9
(22) Anmeldetag: 13.11.2002
(51) Int. Cl.: A01N 43/56, A01N 25/32

(54) **HERBIZIDE MITTEL ENTHALTEND BENZOYLPYRAZOLE UND SAFENER**
HERBICIDAL AGENTS CONTAINING BENZOYLPYRAZOLES AND SAFENERS
AGENTS HERBICIDES CONTENANT DES BENZOPYRAZOLS ET DES PHYTOPROTECTEURS

(30) Priorität: 23.11.2001 DE 10157545
(43) Veröffentlichungstag der Anmeldung: 08.09.2004
(73) Patentinhaber: Bayer CropScience GmbH, 65929 Frankfurt/Main (DE)
(72) Erfinder: SCHMITT, Monika, 60318 Frankfurt am Main (DE); WILLMS, Lothar, 65719 Hofheim (DE); ZIEMER, Frank, 65830 Kriftel (DE); ROSINGER, Christopher, 65719 Hofheim (DE); BIERINGER, Hermann, 65817 Eppstein (DE); HUFF, Hans, Philipp, 65817 Eppstein (DE); HACKER, Erwin, 65239 Hochheim (DE)
(86) Internationale Anmeldenummer: PCT/EP2002/012673
(87) Internationale Veröffentlichungsnummer: WO 2003/043423

(56) Entgegenhaltungen:
- WO-A-00/30447
- DE-A- 19 961 465

## Beschreibung

Die Erfindung betrifft das technische Gebiet der Pflanzenschutzmittel, insbesondere Herbizid-Antidot-Kombinationen (Wirkstoff-Safener-Kombinationen), die für den Einsatz gegen konkurrierende Schadpflanzen in Nutzpflanzenkulturen geeignet sind.

Zahlreiche herbizide Wirkstoffe sind als Inhibitoren des Enzyms p-Hydroxyphenyl-Pyruvat-Dioxygenase (HPPD) bekannt. In jüngerer Zeit wurden beispielsweise in, WO 99/58509 und DE 10016116.2 weitere solcher Wirkstoffe offenbart.

Wie bei vielen anderen herbiziden Wirkstoffen sind auch diese Inhibitoren der HPPD nicht immer ausreichend verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Kulturen nicht oder nur in so geringen Aufwandmengen eingesetzt werden, daß die erwünschte breite herbizide Wirksamkeit gegenüber Schadpflanzen nicht gewährleistet ist. Speziell können viele der genannten Herbizide nicht vollständig selektiv gegen Schadpflanzen in Mais, Reis, Getreide, Zuckerrohr und einigen anderen Kulturen eingesetzt werden.

Zur Überwindung dieser Nachteile ist es bekannt, herbizide Wirkstoffe in Kombination mit einem sogenannten Safener oder Antidot einzusetzen. So sind beispielsweise in WO 99/66795 und WO 00/30447 verschiedene Kombinationen von zahlreichen Inhibitoren der HPPD mit einer Vielzahl von Safenem beschrieben. WO 00/30447 beschreibt unter anderem auch Benzoylpyrazole in Kombination mit verschiedenene Safenem.

Unter einem Safener ist eine Verbindung zu verstehen, die die phytotoxischen Eigenschaften eines Herbizides gegenüber Nutzpflanzen aufhebt oder verringert, ohne daß die herbizide Wirkung gegenüber Schadpflanzen wesentlich vermindert wird.

Die Auffindung eines Safeners für eine bestimmte Gruppe von Herbiziden ist nach wie vor eine schwierige Aufgabe, da die genauen Mechanismen, durch die ein Safener die Schadwirkung von Herbiziden verringert, nicht bekannt sind. Die Tatsache, daß eine Verbindung in Kombination mit einem bestimmten Herbizid als Safener wirkt, läßt daher keine Rückschlüsse darauf zu, ob eine solche Verbindung auch mit anderen Gruppen von Herbiziden Safenerwirkung aufweist. So hat sich bei der Anwendung von Safenem zum Schutz der Nutzpflanzen vor Schädigungen des Herbizids gezeigt, daß die Safener in vielen Fällen immer noch gewisse Nachteile aufweisen können. Dazu zählen:
- der Safener vermindert die Wirkung der Herbizide gegen die Schadpflanzen,
- die nutzpflanzenschützenden Eigenschaften sind nicht ausreichend,
- in Kombination mit einem gegebenen Herbizid ist das Spektrum der Nutzpflanzen, in denen der Safener/Herbizid-Einsatz erfolgen soll, nicht ausreichend groß,
- ein gegebener Safener ist nicht mit einer ausreichend großen Anzahl von Herbiziden kombinierbar.

Aufgabe der vorliegenden Erfindung war es, weitere Kombinationen von Herbiziden aus der Gruppe der HPPD-Inhibitoren mit Safeneren bereit zu stellen, die geeignet sind, die Selektivität dieser Herbizide gegenüber wichtigen Kulturpflanzen zu steigern.

Es wurden nun neue Kombinationen von bestimmten Herbiziden aus der Gruppe der HPPD-Inhibitoren, speziell aus der Gruppe der Benzoylpyrazole, die in 2- und 4-Position des Benzolyteils ausgewählte Substituenten tragen, mit einigen ausgewählten Safenem gefunden, die die Selektivität dieser Herbizide gegenüber wichtigen Kulturpflanzen erhöhen.

Gegenstand der Erfindung ist daher ein herbizid wirksames Mittel, enthaltend
A) eine herbizid wirksame Menge an an einer oder mehreren Verbindungen der Formel (I), gegebenenfalls auch in Form ihrer Salze, 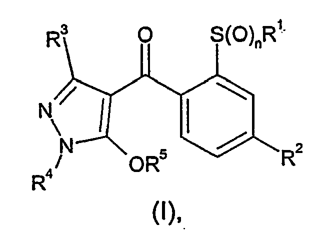 worin
   - R¹: Methyl oder Ethyl;
   - R²: Trifluormethyl, Fluor, Chlor oder Brom;
   - R³: Wasserstoff oder Methyl;
   - R⁴: Methyl oder Ethyl;
   - R⁵: Wasserstoff, Methylsulfonyl, Ethylsulfonyl, n-Propylsulfonyl, Phenylsulfonyl, 4-Methylphenylsulfonyl, Benzyl, Benzoylmethyl, Nitrobenzoylmethyl oder 4-Fluorbenzoylmethyl und
   - n: 0, 1, oder 2 bedeuten, und
B) einer antidotisch wirksamen Menge an mindestens einer Verbindung (Komponente B) aus einer der Gruppen B1 bis B6:
   - B1: Verbindungen der Formel II, 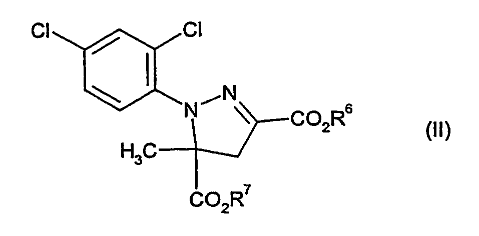 worin R⁶ und R⁷ unabhängig voneinander für Wasserstoff oder (C₁-C₄)-Alkyl stehen;
   - B2: Verbindungen der Formel III, 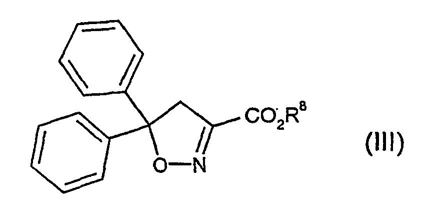 worin R⁸ für Wasserstoff oder (C₁-C₄)-Alkyl steht;
   - B3: oxabetrinil, fluxofenim, fenclorim, flurazole, cloquintocet-mexyl, dichlormid, benoxacor, furilazole, 4-Dichloracetyl-1-oxa-4-aza-spiro[4,5]decan (AD-67);
   - B4: 1,8-Naphthalsäureanhydrid, Methyl-diphenylmethoxyacetat, Cyanomethoxyimino(phenyl)acetonitril (Cyometrinil), 2-Dichlormethyl-2-methyl-1,3-dioxolan (MG-191), N-(4-Methylphenyl)-N'-(1-methyl-1-phenylethyl)hamstoff (Dymron), 1-[4-(N-2-Methoxybenzoylsulfamoyl)phenyl]-3-methylhamstoff, 1-[4-(N-2-Methoxybenzoylsulfamoyl)phenyl]-3,3-dimethylhamstoff, 1-[4-(N-4,5-Dimethylbenzoylsulfamoyl)phenyl]-3-methylhamstoff, 1-[4-(N-Naphthoylsulfamoyl)phenyl]-3,3-dimethylhamstoff, 1-(Ethoxycarbonyl)ethyl 3,6-dichlor-2-methoxybenzoat (Lactidichlor) sowie deren Salze und Ester, vorzugsweise (C₁-C₈), 3-dichoroacetyl-2,2,5-trimethyloxazolidine, (5-Chlor-8-chinolinoxy)essigsäure-(1,3-dimethyl-but-1-yl)-ester, (5-Chlor-8-chinolinoxy)essigsäure-4-allyl-oxy-butylester, (5-Chlor-8-chinolinoxy)essigsäure-1-allyloxy-prop-2-ylester, (5-Chlor-8-chinolinoxy)essigsäureethylester, (5-Chlor-8-chinolinoxy)essigsäuremethylester, (5-Chlor-8-chinolinoxy)essigsäureallylester, (5-Chlor-8-chinolinoxy)essigsäure-2-(2-propyliden-iminoxy)-1-ethylester, (5-Chlor-8-chinolinoxy)essigsäure-2-oxo-prop-1-ylester;
   - B5: Acylsulfamoylbenzoesäureamide der Formel (IV) gegebenenfalls auch in Salzform, 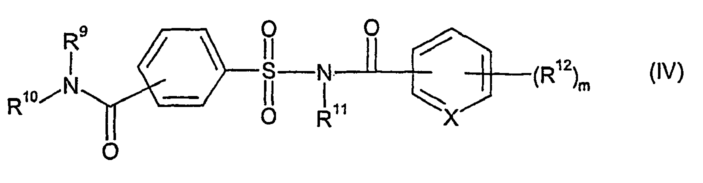 worin
   X CH oder N;
   R⁹ Wasserstoff, (C₁-C₆)-Alkyl, (C₃-C₆)-Cycloalkyl, (C₂-C₆)-Alkenyl, (C₂-C₆)-Alkinyl, wobei die vier letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und im Falle cyclischer Reste auch (C₁-C₄)-Alkyl und (C₁-C₄)-Haloalkyl substituiert sind;
   R¹⁰ Wasserstoff, (C₁-C₆)-Alkyl, (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, (C₁-C₄)-Alkyl, (C₁-C₄)-Alkoxy und (C₁-C₄)-Alkylthio substituiert sind, oder
   R⁹ und R¹⁰ bilden gemeinsam mit dem dem sie tragenden Stickstoffatom einen Pyrrolidinyl- oder Piperidinyl-Rest;
   R¹¹ Wasserstoff, (C₁-C₄)-Alkyl, (C₂-C₄)-Alkenyl oder (C₁-C₄)-Alkinyl;
   R¹² gleich oder verschieden Halogen, Nitro, (C₁-C₄)-Alkyl, (C₁-C₄)-Haloalkyl, (C₁₋C₄)-Haloalkoxy, (C₁-C₄)-Alkoxy, Cyano, (C₁-C₄)-Alkylthio, (C₁-C₄)-Alkylsulfinyl, (C₁₋C₄)-Alkylsulfonyl,
   m ist 0, 1 oder 2;
   - B6: N-Acylsulfonamide der Formel (V) und ihre Salze, 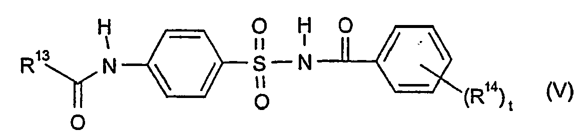 worin
   - R¹³: Wasserstoff, (C₁-C₆)-Alkyl, (C₃-C₆)-Cycloalkyl, wobei jeder der letztgenannten 2 Reste unsubstituiert oder durch einen oder mehrere Substituenten aus der Gruppe Halogen, (C₁-C₄)-Alkoxy, Halogen-(C₁-C₆)-alkoxy und (C₁-C₄)-Alkylthio und im Falle cyclischer Reste auch (C₁-C₄)-Alkyl und (C₁-C₄)-Haloalkyl substituiert ist,
   - R¹⁴: Halogen, (C₁-C₄)-Alkyl, (C₁-C₄)-Halogenalkyl, wie Trifluormethyl, Halogen-(C₁₋C₄)-alkoxy, (C₁-C₄)-Alkoxy oder (C₁-C₄)-Alkylthio,
   - t: 1 oder 2 bedeuten,
einschließlich der Stereoisomeren und der in der Landwirtschaft gebräuchlichen Salze. Herbizid wirksame Menge bedeutet im Sinne der Erfindung eine Menge an einem oder mehreren Herbiziden, die geeignet ist, den Pflanzenwuchs negativ zu beinflussen.

Antidotisch wirksame Menge bedeutet im Sinne der Erfindung eine Menge an einem oder mehreren Safenern, die geeignet ist, der phytotoxischen Wirkung eines Herbizids oder Herbizidgemisches an einer Nutzpflanze zumindest teilweise entgegenzuwirken.

Sofern es im einzelnen nicht anders definiert wird, gelten für die Reste in den Formeln (I) im allgemeinen die nachfolgend genannten Definitionen.

Alkyl, auch in seinen zusammengesetzten Bedeutungen wie Alkoxy oder Haloalkoxy bedeutet beispielsweise Methyl, Ethyl, n- oder i-Propyl, n-, i-, t- oder 2-Butyl, n-Pentyl und n-Hexyl. Analog sind die Bedeutungen von Alkenyl und Alkinyl zu verstehen.

In den Verbindungen der Formeln (I) bis (V) umfaßt sind auch alle Stereoisomeren, welche die gleiche topologische Verknüpfung der Atome aufweisen, und deren Gemische. Solche Verbindungen enthalten ein oder mehrere asymmetrische C-Atome und/oder Doppelbindungen. Die durch ihre spezifische Raumform definierten möglichen Enantiomere und/oder Diastereomere können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Als herbizide Wirkstoffe eignen sich erfindungsgemäß solche Verbindungen der allgemeinen Formel (I), die allein nicht oder nicht optimal in Nutzpflanzenkulturen wie Getreidekulturen, Reis oder Mais eingesetzt werden können, weil sie die Kulturpflanzen zu stark schädigen.

Herbizide der allgemeinen Formel (I) sind z.B. aus DE 10016116.2 bekannt. Die Verbindungen der Gruppe B1 sind aus US 5,703,008 und US 5,700,758 bekannt. Die Verbindungen der Gruppe B2 sind aus WO 95/07897 und dort zitierter Literatur bekannt. Die chemischen Strukturen der mit ihren Common Names genannten Wirkstoffe der Gruppe B3 sind beispielsweise aus "The Pesticide Manual" 12. Auflage, 2000, British Crop Protection Council, bekannt. Die Verbindungen der Gruppe B4 sind beispielsweise aus EP-A-0 086 750, EP-A-0 94349 (US 4,902,340), EP-A-0 191736 (US 4,881,966) und EP-A-0 492 366 und dort zitierter Literatur bekannt. Die Verbindungen der Gruppe B5 sind in der WO-A-97/45016, die der Gruppe B6 in der deutschen Patentanmeldung 197 42 951.3 beschrieben. Die vorgenannten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Im Rahmen der vorliegenden Anmeldung sind die Begriffe "Herbizide Mittel" und "Herbizid-Safener-Kombinationen" als gleichbedeutend zu verstehen.

Bevorzugt sind herbizide Mittel, die einen herbiziden Wirkstoff der Formel (la) umfassend die Verbindungen A1, A2, A3 und A4 enthalten:

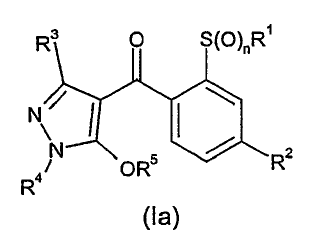

| **Nr.** | **R**^{**1**} | **R**^{**2**} | **R**^{**3**} | **R**^{**4**} | **R**^{**5**} | **n** |
|---|---|---|---|---|---|---|
| (A1) | CH₃ | CF₃ | H | CH₃ | H | 2 |
| (A2) | CH₃ | CF₃ | CH₃ | CH₃ | H | 2 |
| (A3) | CH₃ | CF₃ | CH₃ | CH₂CH₃ | H | 2 |
| (A4) | CH₃ | CF₃ | H | CH₂CH₃ | H | 2 |

Bevorzugt sind auch herbizide Mittel enthaltend als Safener eine oder mehrere Verbindungen aus der Gruppe umfassend die Verbindungen mefenpyr-diethyl (B1.1), oxabetrinil (B3.1), fluxofenim (B3.2), fenclorim (B3.3), flurazole (B3.4), cloquintocet-mexyl (B3.5), dichlormid (B3.6), benoxacor (B3.7), furilazole (B3.8) und die Verbindungen B2.1, B2.2, B2.3, B5.1, B5.2, B5.3, B5.4, B5.5, B5.6 und B5.7:

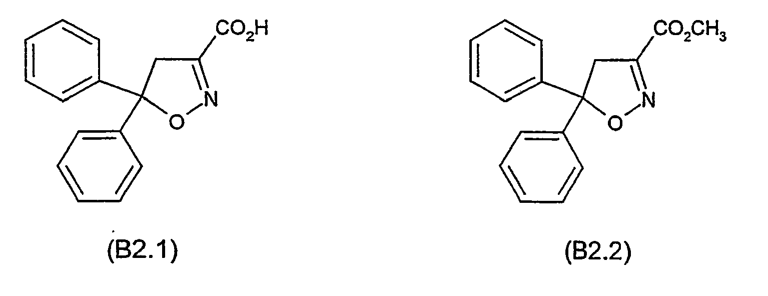

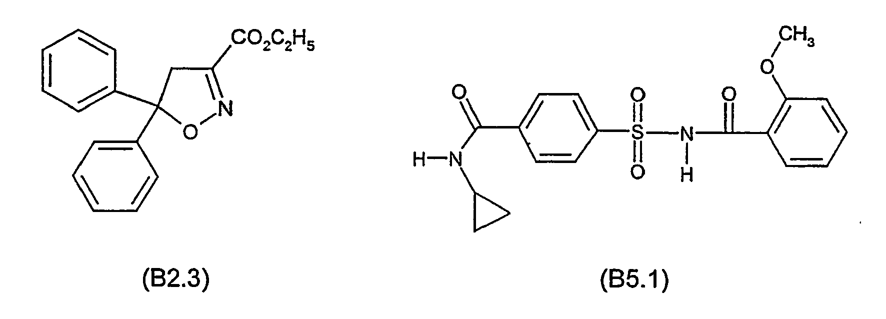

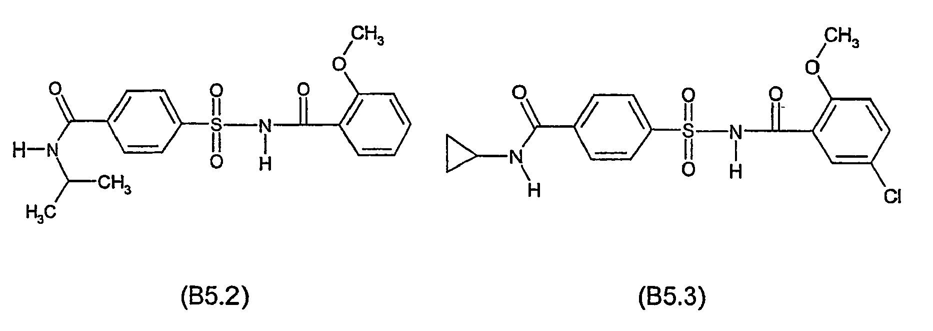

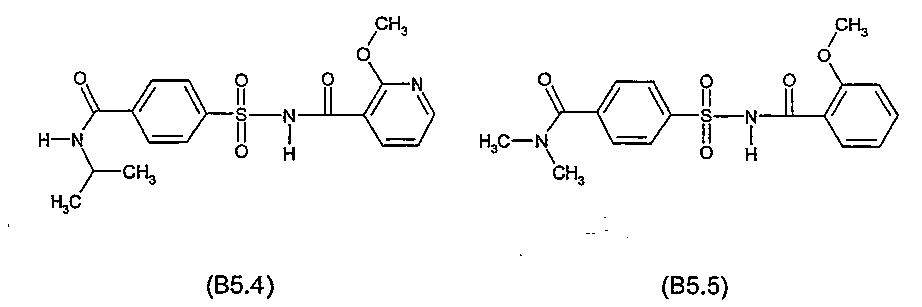

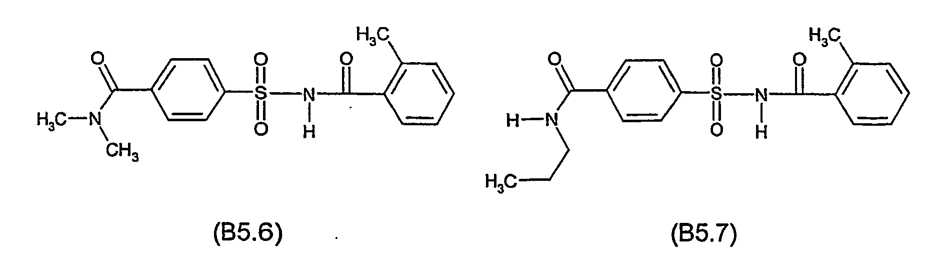

Besonders bevorzugt sind herbizide Mittel enthaltend folgende Kombinationen von zwei Verbindungen (A) + (B):
(A1)+(B1.1), (A1)+(B2.1), (A1)+(B2.2), (A1)+(B2.3), (A1)+(B3.1), (A1)+(B3.2), (A1)+(B3.3), (A1)+(B3.4), (A1)+(B3.5), (A1)+(B3.6), (A1)+(B3.7), (A1)+(B3.8), (A1)+(B5.1), (A1)+(B5.2), (A1)+(B5.3), (A1)+(B5.4), (A1)+(B5.5), (A1)+(B5.6), (A1)+(B5.7);
(A2)+(B1.1), (A2)+(B2.1), (A2)+(B2.2), (A2)+(B2.3), (A2)+(B3.1), (A2)+(B3.2), (A2)+(B3.3), (A2)+(B3.4), (A2)+(B3.5), (A2)+(B3.6), (A2)+(B3.7), (A2)+(B3.8), (A2)+(B5.1), (A2)+(B5.2), (A2)+(B5.3), (A2)+(B5.4), (A2)+(B5.5), (A2)+(B5.6), (A2)+(B5.7);
(A3)+(B1.1), (A3)+(B2.1), (A3)+(B2.2), (A3)+(B2.3), (A3)+(B3.1), (A3)+(B3.2), (A3)+(B3.3), (A3)+(B3.4), (A3)+(B3.5), (A3)+(B3.6), (A3)+(B3.7), (A3)+(B3.8), (A3)+(B5.1), (A3)+(B5.2), (A3)+(B5.3), (A3)+(B5.4), (A3)+(B5.5), (A3)+(B5.6), (A3)+(B5.7);
(A4)+(B1.1), (A4)+(B2.1), (A4)+(B2.2), (A4)+(B2.3), (A4)+(B3.1), (A4)+(B3.2), (A4)+(B3.3), (A4)+(B3.4), (A4)+(B3.5), (A4)+(B3.6), (A4)+(B3.7), (A4)+(B3.8), (A4)+(B5.1), (A4)+(B5.2), (A4)+(B5.3), (A4)+(B5.4), (A4)+(B5.5), (A4)+(B5.6), (A4)+(B5.7).

Die hier als Safener (Antidote) genannten Verbindungen, reduzieren oder unterbinden phytotoxische Effekte, die beim Einsatz der herbiziden Wirkstoffe der Formel (I) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Reis und Mais ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-Mix-Verfahren) oder in beliebiger Reihenfolge nacheinander ausgebracht werden. Das Gewichtsverhältnis Safener zu herbizider Wirkstoff kann innerhalb weiter Grenzen variieren und ist vorzugsweise im Bereich von 1:100 bis 100:1, insbesondere von 1:10 bis 10:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch einfache, routinemäßige Vorversuche ermitteln.

Bevorzugt werden die erfindungsgemäßen Kombinationen zur Bekämpfung von unerwünschten Schadpflanzen in Kulturen von Mais und Getreide, z.B. Weizen, Roggen, Gerste, Hafer, Reis, Sorghum, sowie Baumwolle, Zuckerrübe, Zuckerrohr und Sojabohne, vorzugsweise Getreide, Reis und Mais, verwendet.

Die erfindungsgemäß eingesetzten Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation und verwendetem herbiziden Wirkstoff innerhalb weiter Grenzen schwanken und liegen in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden der Formel (I), das dadurch gekennzeichnet ist, daß eine antidotisch wirksame Menge einer oder mehrerer Verbindungen der Komponente B vor, nach oder gleichzeitig mit dem herbiziden Wirkstoff A der Formel (I) auf die Pflanzen, Pflanzensamen oder die Anbaufläche appliziert wird.

Die erfindungsgemäße Herbizid-Safener Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Emtegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Kombinationen in wirtschaftlich bedeutenden Kulturen von transgenen Nutzpflanzen, z. B. von Getreide wie Weizen, Gerste, Roggen, Hafer, Hirse, Reis, Maniok und Mais oder auch Kulturen von Zuckerrübe, Zuckerrohr, Baumwolle, Soja, Raps, Kartoffel, Tomate, Erbse und anderen Gemüsesorten.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, z.B. ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Kombination zur Bekämpfung von Schadpflanzen in transgenen Kulturpflanzen.

Die Safener der Komponente B und deren Kombinationen mit einem oder mehreren der genannten herbiziden Wirkstoffe der Formel (I) können auf verschiedene Art formuliert werden, je nachdem welche biologischen und/oder chemischphysikalischen Parameter vorgegeben sind. Als Formulierungsmöglichkeiten kommen beispielsweise in Frage:
Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen als Pflanzenschutzmitteln wirksamen Stoffen, wie Insektiziden, Akariziden, Herbiziden, Fungiziden, sowie mit Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen, wie Hammermühlen, Gebläsemühlen und Luftstrahlmühlen, feingemahlen und gleichzeitig oder anschließend mit den Formulierungshilfsmitteln vermischt.

Emulgierbare Konzentrate werden z.B. durch Auflösen des Wirkstoffes in einem organischen Lösungsmittel, wie Butanol, Cyclohexanon, DMF oder auch höhersiedende Kohlenwasserstoffe wie gesättigte oder ungesättigte Aliphaten oder Alicyclen, Aromaten oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze, wie Ca-dodecylbenzolsulfonat, oder nichtionische Emulgatoren, wie Fettsäurepolyglykolester, Alkylarylpolyglykolether, Fettalkoholpolyglykolether, Propylenoxid-Ethylenoxid-Kondensationsprodukte, Alkylpolyether, Sorbitanester, wie Sorbitanfettsäureester, oder Polyoxyethylensorbitanester, wie Polyoxyethylensorbitanfettsäureester. Stäubemittel erhält man im allgemeinen durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen, wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren, wie Sprühtrocknung, Wirbelbett-Granulierung, Teller-Granulierung, Mischung mit Hochgeschwindigkeitsmischern und Extrusion ohne festes Inertmaterial, hergestellt.

Zur Herstellung von Teller-, Fließbett-, Extruder- und Sprühgranulaten siehe z.B. in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gew.-%, insbesondere 0,1 bis 95 Gew.-%, Wirkstoffe aus der Gruppe B oder des Herbizid/Antidot-Wirkstoffgemischs (I) / B und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Konzentration etwa 1 bis 80 Gew.-%. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Mit den äußeren Bedingungen wie Temperatur, Feuchtigkeit, der Art des verwendeten Herbizids, u.a. variiert die erforderliche Aufwandmenge der Herbizide der Formel (I). Sie kann innerhalb weiter Grenzen variiert werden, z.B. zwischen 0,001 und 10,0 kg/ha oder mehr Aktivsubstanz, vorzugsweise liegt sie jedoch zwischen 0,005 und 5 kg/ha.

Folgende Beispiele dienen zur Erläuterung der Erfindung:
A Formulierungsbeispiele
a) Ein Staubmittel wird erhalten, indem man 10 Gew.-Teile einer Verbindung der Gruppe B oder eines Wirkstoffgemischs aus einem herbiziden Wirkstoff der Formel (I) und einer Verbindung der Gruppe B und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung der Gruppe B oder eines Wirkstoffgemischs aus einem herbiziden Wirkstoff der Formel (I) und einer Verbindung der Gruppe B, 64 Gewichtsteile kaolinhaltigen Quarz als Inertstoff, 10 Gewichts-teile ligninsulfonsaures Kalium und 1 Gew.-Teil oleoylmethyltaurinsaures Natrium als Netz- und Dispergiermittel mischt und in einer Stiftmühle mahlt.
b) Ein in Wasser leicht dispergierbares Dispersionskonzentrat wird erhalten, indem man 20 Gewichtsteile einer Verbindung der Gruppe B oder eines Wirkstoffgemischs aus einem herbiziden Wirkstoff der Formel (I) und einer Verbindung der Gruppe B, 6 Gew.-Teilen Alkylphenolpolyglykolether (®Triton X 207), 3 Gew.-Teilen lsotridecanolpolyglykolether (8 EO) und 71 Gew.-Teilen paraffinischem Mineralöl (Siedebereich z.B. ca. 255 bis über 277 C) mischt und in einer Reibkugelmühle auf eine Feinheit von unter 5 Mikron vermahlt.
d) Ein emulgierbares Konzentrat wird erhalten aus 15 Gew.-Teilen einer Verbindung der Gruppe B oder eines Wirkstoffgemischs aus einem herbiziden Wirkstoff der Formel (I) und einer Verbindung der Gruppe B, 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man

| | |
|---|---|
| 75 Gew.-Teile | einer Verbindung der Gruppe B oder eines Wirkstoffgemischs aus einem herbiziden Wirkstoff der Formel (I) und einer Verbindung der Gruppe B, |
| 10 " | ligninsulfonsaures Calcium, |
| 5 " | Natriumlaurylsulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man

| | |
|---|---|
| 25 Gew.-Teil(e) | einer Verbindung der Gruppe B oder eines Wirkstoffgemischs aus einem herbiziden Wirkstoff der Formel (I) und einer Verbindung der Gruppe B, |
| 5 " | 2,2'-dinaphthylmethan-6,6'-disulfonsaures Natrium, |
| 2 " | oleoylmethyltaurinsaures Natrium, |
| 1 " | Polyvinylalkohol, |
| 17 " | Calciumcarbonat und |
| 50 " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.
B Biologische Beispiele

### Versuche im Nachauflauf:

Samen von Nutzpflanzen werden im Freiland in Erde ausgelegt und mit Erde bedeckt. Im Dreiblattstadium, d.h. etwa drei Wochen nach Beginn der Aufzucht werden die Pflanzen mit den als emulgierbare Konzentrate oder Stäubemittel formulierten Herbiziden und Safenem in Form wäßriger Dispersionen oder Suspensionen bzw. Emulsionen behandelt mit einer Wasseraufwandmenge von umgerechnet 300 bis 8001/ha in unterschiedlichen Dosierungen auf die grünen Pflanzenteile gesprüht. Die optische Bewertung der Schäden an den Nutzpflanzen erfolgt 14 Tage nach der Behandlung. Die Ergebnisse zeigen, daß durch die Verwendung der erfindungsgemäßen Mittel enthaltend Herbizid und Safener die Schäden in den Nutzpflanzen gegenüber der alleinigen Verwendung des Herbizids deutlich gemindert werden können. Je nach Aufwandmenge, Art der Nutzpflanze und Art des erfindungsgemäßen Mittels werden die Schäden um bis 100% gegenüber der alleinigen Verwendung des Herbizid gemindert.

In den nachfolgenden Tabellen sind die Versuchsergebnisse einiger erfindungsgemäßer herbizider Mittel enthaltend Herbizid und Safener aufgeführt. Tabelle 2 zeigt die Verminderung der Schädigung der Kulturpflanze Weizen bei Einsatz der erfindungsgemäßen Mittel gegenüber der alleinigen Verwendung des Herbizids. Tabelle 3 zeigt die Verminderung der Schädigung der Kulturpflanze Mais verschiedener Sorten bei Einsatz der erfindungsgemäßen Mittel gegenüber der alleinigen Verwendung des Herbizids.

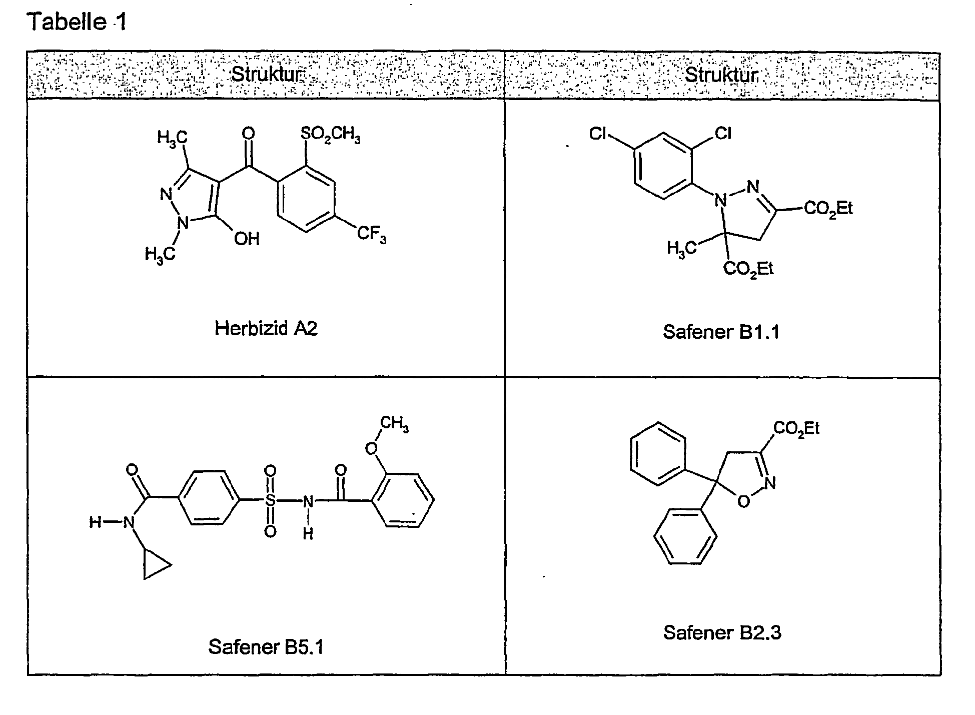

**Tabelle 2**

| **Verbindung** | **Dosierung [g a.i./ha]** | **Schadensminderung in Weizen** |
|---|---|---|
| A2 + B1.1 | 75 + 15 | -56% |

**Tabelle 3**

| **Verbindung** | **Dosierung [g a.i./ha]** | **Schadensminderung in Mais** |
|---|---|---|
| A2 + B5.1 | 200 + 100 | -100% (Sorte "DEA") |
| A2 + B2.3 | 150 + 150 | -100% (Sorte "HELIX") |

## Patentansprüche

1. Herbizides Mittel, enthaltend
A) eine herbizid wirksame Menge an an einer oder mehreren Verbindungen der Formel (I), gegebenenfalls auch in Form ihrer Salze, 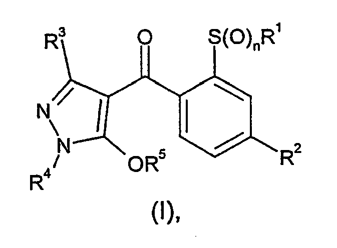 worin
R¹ Methyl oder Ethyl;
R² Trifluormethyl, Fluor, Chlor oder Brom;
R³ Wasserstoff oder Methyl;
R⁴ Methyl oder Ethyl;
R⁵ Wasserstoff, Methylsulfonyl, Ethylsulfonyl, n-Propylsulfonyl, Phenylsulfonyl, 4-Methylphenylsulfonyl, Benzyl, Benzoylmethyl, Nitrobenzoylmethyl oder 4-Fluorbenzoylmethyl und
n 0, 1, oder 2 bedeuten, und
B) einer antidotisch wirksamen Menge an mindestens einer Verbindung (Komponente B) aus einer der Gruppen B1 bis B6:
B1 Verbindungen der Formel II, 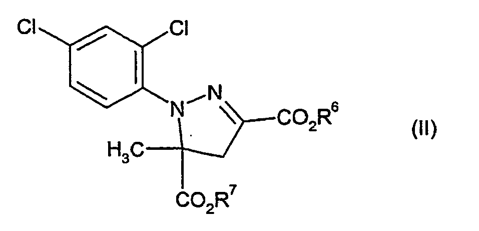 worin R⁶ und R⁷ unabhängig voneinander für Wasserstoff oder (C₁-C₄)-Alkyl stehen;
B2 Verbindungen der Formel III, 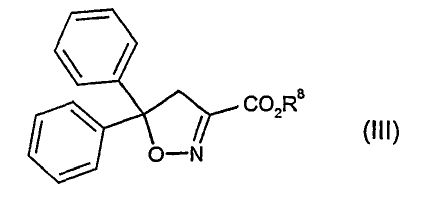 worin R⁸ für Wasserstoff oder (C₁-C₄)-Alkyl steht;
B3 oxabetrinil, fluxofenim, fenclorim, flurazole, cloquintocet-mexyl, dichlormid, benoxacor, furilazole, 4-Dichloracetyl-1-oxa-4-aza-spiro[4,5]decan (AD-67);
B4 1,8-Naphthalsäureanhydrid, Methyl-diphenylmethoxyacetat, Cyanomethoxyimino(phenyl)acetonitril (Cyometrinil), 2-Dichlormethyl-2-methyl-1,3-dioxolan (MG-191), N-(4-Methylphenyl)-N'-(1-methyl-1-phenylethyl)harnstoff (Dymron), 1-[4-(N-2-Methoxybenzoylsulfamoyl)phenyl]-3-methylharnstoff, 1-[4-(N-2-Methoxybenzoylsulfamoyl)phenyl]-3,3-dimethylharnstoff, 1-[4-(N-4,5-Dimethylbenzoylsulfamoyl)phenyl]-3-methylharnstoff, 1-[4-(N-Naphthoylsulfamoyl)phenyl]-3,3-dimethylharnstoff, 1-(Ethoxycarbonyl)ethyl 3,6-dichlor-2-methoxybenzoat (Lactidichlor) sowie deren Salze und Ester, vorzugsweise (C₁-C₈), 3-dichloroacetyl-2,2,5-trimethyloxazolidine, (5-Chlor-8-chinolinoxy)essigsäure-(1,3-dimethyl-but-1-yl)-ester, (5-Chlor-8-chinolinoxy)essigsäure-4-allyl-oxy-butylester, (5-Chlor-8-chinolinoxy)essigsäure-1-allyloxy-prop-2-ylester, (5-Chlor-8-chinolinoxy)essigsäureethylester, (5-Chlor-8-chinolinoxy)essigsäuremethylester, (5-Chlor-8-chinolinoxy)essigsäureallylester, (5-Chlor-8-chinolinoxy)essigsäure-2-(2-propyliden-iminoxy)-1-ethylester, (5-Chlor-8-chinolinoxy)essigsäure-2-oxo-prop-1-ylester;
B5 Acylsulfamoylbenzoesäureamide der Formel (IV) gegebenenfalls auch in Salzform, 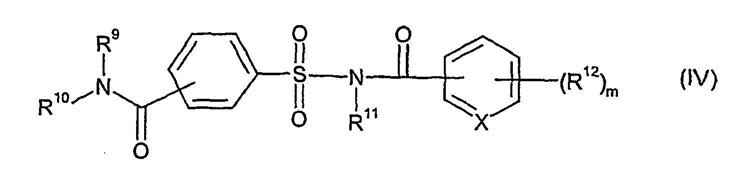 worin
X CH oder N;
R⁹ Wasserstoff, (C₁-C₆)-Alkyl, (C₃-C₆)-Cycloalkyl, (C₂-C₆)-Alkenyl, (C₂-C₆)-Alkinyl, wobei die vier letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxycarbonyl, (C₁-C₄)-Alkylcarbonyl und im Falle cyclischer Reste auch (C₁-C₄)-Alkyl und (C₁-C₄)-Haloalkyl substituiert sind;
R¹⁰ Wasserstoff, (C₁-C₆)-Alkyl, (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, (C₁-C₄)-Alkyl, (C₁-C₄)-Alkoxy und (C₁-C₄)-Alkylthio substituiert sind, oder
R⁹ und R¹⁰ bilden gemeinsam mit dem dem sie tragenden Stickstoffatom einen Pyrrolidinyl- oder Piperidinyl-Rest;
R¹¹ Wasserstoff, (C₁-C₄)-Alkyl, (C₂-C₄)-Alkenyl oder (C₁-C₄)-Alkinyl;
R¹² gleich oder verschieden Halogen, Nitro, (C₁-C₄)-Alkyl, (C₁-C₄)-Haloalkyl, (C₁₋C₄)-Haloalkoxy, (C₁-C₄)-Alkoxy, Cyano, (C₁-C₄)-Alkylthio, (C₁-C₄)-Alkylsulfinyl, (C₁₋C₄)-Alkylsulfonyl,
m ist 0, 1 oder 2;
B6 N-Acylsulfonamide der Formel (V) und ihre Salze, 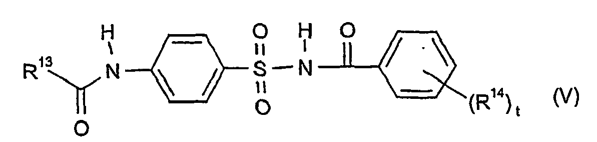 worin
R¹³ Wasserstoff, (C₁-C₆)-Alkyl, (C₃-C₆)-Cycloalkyl, wobei jeder der letztgenannten 2 Reste unsubstituiert oder durch einen oder mehrere Substituenten aus der Gruppe Halogen, (C₁-C₄)-Alkoxy, Halogen-(C₁-C₆)-alkoxy und (C₁-C₄)-Alkylthio und im Falle cyclischer Reste auch (C₁-C₄)-Alkyl und (C₁-C₄)-Haloalkyl substituiert ist,
R¹⁴ Halogen, (C₁-C₄)-Alkyl, (C₁-C₄)-Halogenalkyl, wie Trifluormethyl, Halogen-(C₁₋C₄)-alkoxy, (C₁-C₄)-Alkoxy oder (C₁-C₄)-Alkylthio,
t 1 oder 2 bedeuten,
einschließlich der Stereoisomeren und der in der Landwirtschaft gebräuchlichen Salze.

2. Herbizide Mittel nach Anspruch 1, worin
R¹ Methyl;
R² Trifluormethyl;
R³ Wasserstoff oder Methyl;
R⁴ Methyl oder Ethyl;
R⁵ Wasserstoff und
n 2
bedeuten.

3. Herbizides Mittel nach Anspruch 1 oder 2, **dadurch gekennzeichnet, daß** das Gewichtsverhältnis Herbizid:Safener 1:100 bis 100:1 beträgt.

4. Verfahren zur Bekämpfung von Schadpflanzen in Kulturen von Nutzpflanzen, **dadurch gekennzeichnet, daß** man eine herbizid wirksame Menge an einer Herbizid-Safener-Kombination gemäß einem oder mehreren der Ansprüche 1 bis 3 auf die Schadpflanzen, Pflanzen, Pflanzensamen oder die Fläche, auf der die Pflanzen wachsen, aufbringt.

5. Verfahren gemäß Anspruch 4, **dadurch gekennzeichnet, daß** die Pflanzen aus der Gruppe Mais, Weizen, Roggen, Gerste, Hafer, Reis, Sorghum, Baumwolle, Zuckerrohr und Soja stammen.

6. Verfahren gemäß Anspruch 4 oder 5, **dadurch gekennzeichnet, daß** die Pflanzen gentechnisch verändert sind.

## Claims

1. A herbicidal composition, comprising
A) a herbicidally effective amount of one or more compounds of the formula (I), if appropriate also in the form of their salts, 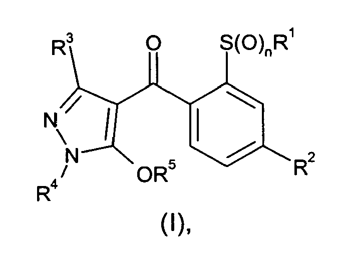 where
R¹ is methyl or ethyl;
R² is trifluoromethyl, fluorine, chlorine or bromine;
R³ is hydrogen or methyl;
R⁴ is methyl or ethyl;
R⁵ is hydrogen, methylsulfonyl, ethylsulfonyl, n-propylsulfonyl, phenylsulfonyl, 4-methylphenylsulfonyl, benzyl, benzoylmethyl, nitrobenzoylmethyl or 4-fluorobenzoylmethyl and
n is 0, 1, or 2, and
B) an antidote-effective amount of at least one compound (component B) from one of the groups B 1 to B6:
B 1 compounds of the formula II 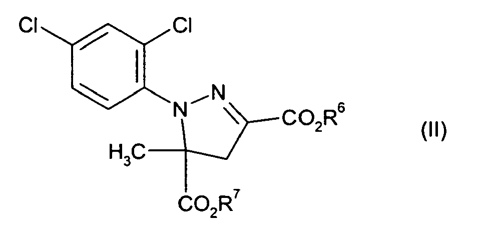 where R⁶ and R⁷ independently of one another are hydrogen or (C₁-C₄)-alkyl;
B2 compounds of the formula III 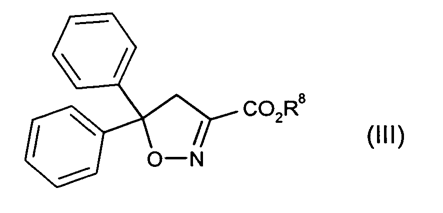 where R⁸ is hydrogen or (C₁-C₄)-alkyl;
B3 oxabetrinil, fluxofenim, fenclorim, flurazole, cloquintocet-mexyl, dichlormid, benoxacor, furilazole, 4-dichloroacetyl-1-oxa-4-aza-spiro[4,5]decane (AD-67);
B4 1,8-naphthalic anhydride, methyl diphenylmethoxyacetate, cyanomethoxyimino(phenyl)acetonitrile (cyometrinil), 2-dichloromethyl-2-methyl-1,3-dioxolane (MG-191), N-(4-methylphenyl)-N'-(1-methyl-1-phenylethyl)urea (dymron), 1-[4-(N-2-methoxybenzoylsulfamoyl)phenyl]-3-methylurea, 1-[4-(N-2-methoxybenzoylsulfamoyl)phenyl]-3,3-dimethylurea, 1-[4-(N-4,5-dimethylbenzoylsulfamoyl)phenyl]-3-methylurea, 1-[4-(N-naphthoylsulfamoyl)phenyl]-3,3-dimethylurea, 1-(ethoxycarbonyl)ethyl 3,6-dichloro-2-methoxybenzoate (lactidichlor) and their salts and esters, preferably (C₁-C₈), 3-dichloroacetyl-2,2,5-trimethyloxazolidine, 1,3-dimethylbut-1-yl (5-chloro-8-quinolineoxy)acetate, 4-allyloxybutyl (5-chloro-8-quinolineoxy)acetate, 1-allyloxyprop-2-yl (5-chloro-8-quinolineoxy)acetate, ethyl (5-chloro-8-quinolineoxy)acetate, methyl (5-chloro-8-quinolineoxy)acetate, allyl (5-chloro-8-quinolineoxy)acetate, 2-(2-propylideneiminooxy)-1-ethyl (5-chloro-8-quinolineoxy)acetate, 2-oxoprop-1-yl (5-chloro-8-quinolineoxy)acetate;
B5 acylsulfamoylbenzamides of the formula (IV), if appropriate also in salt form, 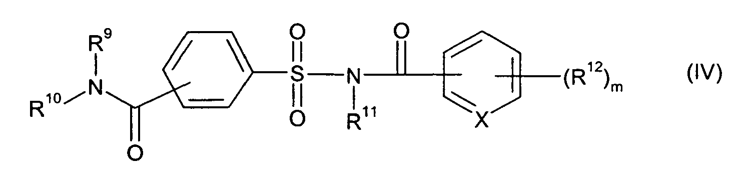 where
X is CH or N;
R⁹ is hydrogen, (C₁-C₆)-alkyl, (C₃-C₆)-cycloalkyl, (C₂-C₆)-alkenyl, (C₂-C₆)-alkynyl, where the four last mentioned radicals are unsubstituted or substituted by one or more identical or different substituents from the group consisting of halogen, (C₁-C₆)-alkoxy, (C₁-C₆)-haloalkoxy, (C₁-C₂)-alkylsulfinyl, (C₁-C₂)-alkylsulfonyl, (C₃-C₆)-cycloalkyl, (C₁-C₄)-alkoxycarbonyl, (C₁-C₄)-alkylcarbonyl and, in the case of cyclic radicals, also (C₁-C₄)-alkyl and (C₁-C₄)-haloalkyl;
R¹⁰ is hydrogen, (C₁-C₆)-alkyl, (C₂-C₆)-alkenyl, (C₂-C₆)-alkynyl, where the three last mentioned radicals are unsubstituted or substituted by one or more identical or different substituents from the group consisting of halogen, (C₁-C₄)-alkyl, (C₁-C₄)-alkoxy and (C₁-C₄)-alkylthio, or
R⁹ and R¹⁰ together with the nitrogen atom carrying them form a pyrrolidinyl or piperidinyl radical;
R¹¹ is hydrogen, (C₁-C₄)-alkyl, (C₂-C₄)-alkenyl or (C₁-C₄)-alkynyl;
R¹² are identical or different and are halogen, nitro, (C₁-C₄)-alkyl, (C₁-C₄)-haloalkyl, (C₁-C₄)-haloalkoxy, (C₁-C₄)-alkoxy, cyano, (C₁-C₄)-alkylthio, (C₁-C₄)-alkylsulfinyl, (C₁-C₄)-alkylsulfonyl,
m is 0, 1 or 2;
B6 N-acylsulfonamides of the formula (V) and their salts 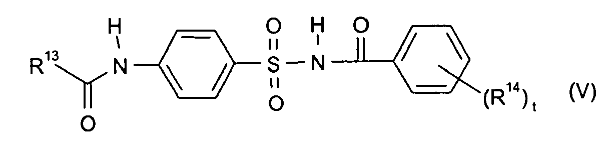 where
R¹³ is hydrogen, (C₁-C₆)-alkyl, (C₃-C₆)-cycloalkyl, where each of the 2 last mentioned radicals is unsubstituted or substituted by one or more substituents from the group consisting of halogen, (C₁-C₄)-alkoxy, halo-(C₁-C₆)-alkoxy and (C₁-C₄)-alkylthio and, in the case of cyclic radicals, also (C₁-C₄)-alkyl and (C₁-C₄)-haloalkyl,
R¹⁴ is halogen, (C₁-C₄)-alkyl, (C₁-C₄)-haloalkyl, such as trifluoromethyl, halo-(C₁-C₄)-alkoxy, (C₁-C₄)-alkoxy or (C₁-C₄)-alkylthio,
t is 1 or 2,
including the stereoisomers and the agriculturally useful salts.

2. A herbicidal composition as claimed in claim 1, where
R¹ is methyl;
R² is trifluoromethyl;
R³ is hydrogen or methyl;
R⁴ is methyl or ethyl;
R⁵ is hydrogen and
n is 2.

3. A herbicidal composition as claimed in claim 1 or 2, wherein the weight ratio herbicide:safener is from 1:100 to 100:1.

4. A method for controlling harmful plants in crops of useful plants, which comprises applying a herbicidally effective amount of a herbicide/safener combination as claimed in one or more of claims 1 to 3 onto the harmful plants, plants, plant seeds or the area on which the plants grow.

5. The method as claimed in claim 4, wherein the plants originate from the group consisting of corn, wheat, rye, barley, oats, rice, sorghum, cotton, sugar cane and soya.

6. The method as claimed in claim 4 or 5, wherein the plants are genetically modified.

## Revendications

1. Agent herbicide renfermant
A) une quantité à efficacité herbicide d'un ou plusieurs composés de formule (I), éventuellement aussi sous forme de leurs sels, 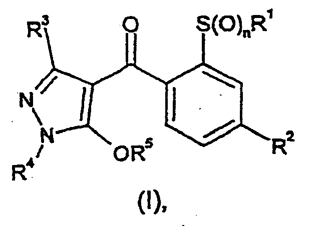 où
R¹ représente un groupe méthyle ou éthyle ;
R² représente un groupe trifluorméthyle, un atome de fluor, de chlore ou de brome ;
R³ représente un atome d'hydrogène ou un groupe méthyle ;
R⁴ représente un groupe méthyle ou éthyle ;
R⁵ représente un atome d'hydrogène, un groupe méthylsulfonyle, éthylsulfonyle, n-propyl-sulfonyle, phénylsulfonyle, 4-méthylphénylsulfonyle, benzyle, benzoylméthyle, nitrobenzoylméthyle ou 4-fluorbenzoylméthyle, et
n vaut 0, 1 ou 2, et
B) une quantité à efficacité antidotique d'au moins un composé (composant B) pris dans un des groupes B1 à B6 ;
B1) composés de formule II, 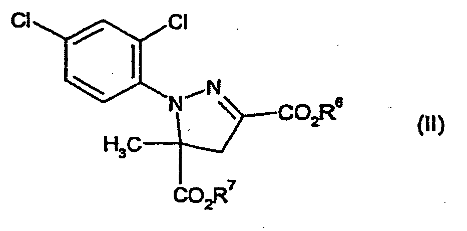 où
R⁶ et R⁷, indépendamment l'un de l'autre, représentent un atome d'hydrogène ou un groupe alkyle en C₁₋C₄ ;
B2) composés de formule III, 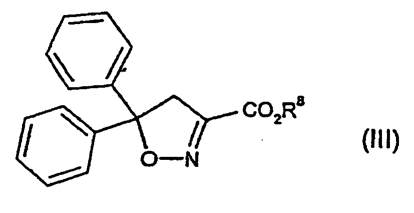 où
R⁸ représente un atome d'hydrogène ou un groupe alkyle en C₁-C₄ ;
B3) oxabetrinil, fluxofenim, fenclorim, flurazole, cloquintocet-mexyle, dichlormid, benoxacor, furilazole, 4-dichloracétyl-1-oxa-4-aza-spiro[4,5]décane (AD-67) ;
B4) anhydride de l'acide 1,8-naphtalique, diphényl-méthoxyacétate de méthyle, cyanométhoxy-imino(phényl)acétonitrile (cyometrinil), 2-dichlorométhyl-2-méthyl-1,3-dioxolane (MG-191), N-(4-méthylphényl)-N'-(1-méthyl-1-phényléthyl)-urée (Dymron), 1-[4-(N-2-méthoxybenzoyl-sulfamoyl)-phényl]-3-méthylurée, 1-[4-(N-2-méthoxybenzoylsulfamoyl)phényl]-3,3-diméthyl-urée, 1-[4-(N-4,5-diméthylbenzoylsulfamoyl)-phényl]-3-méthylurée, 1-[4-(N-naphtoyl-sulfamoyl)-phényl]-3,3-diméthylurée, 3,6-dichloro-2-méthoxybenzoate de 1-(éthoxy-carbonyl)-éthyle (lactidichlor) ainsi que ses sels et esters, de préférence en C₁-C₈, 3-dichloroacétyl-2,2,5-triméthyloxazolidine, (5-chloro-8-quinoléinoxy)acétate de (1,3-diméthyl-but-1-yle), (5-chloro-8-quinoléinoxy)acétate de 4-allyl-oxy-butyle, (5-chloro-8-quinoléinoxy)-acétate de 1-allyloxy-prop-2-yle, (5-chloro-8-quinoléinoxy)acétate d'éthyle, (5-chloro-8-quïnoléinoxy)acétate de méthyle, (5-chloro-8-quinoléinoxy)acétate d'allyle, (5-chloro-8-quinoléinoxy)acétate de 2-(2-propylidène-iminoxy)-1-éthyle, (5-chloro-8-quinoléinoxy)-acétate de 2-oxo-prop-1-yle ;
B5) Acylsulfamoylbenzoamides de formule (IV) éventuellement aussi sous forme salifiée 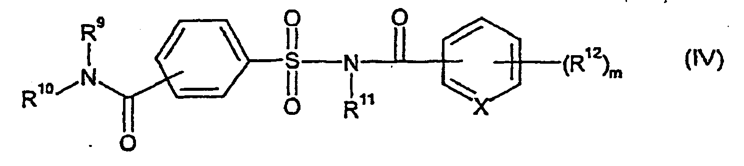 où
X représente un groupe OH ou N ;
R⁹ représente un atome d'hydrogène, un groupe alkyle en C₁-C₆, cycloalkyle en C₃-C₆, alcényle en C₂-C₆, alcynyle en C₂-C₆, les quatre derniers restes cités sont éventuellement substitués par un ou plusieurs substituants identiques ou différents pris dans le groupe comprenant un atome d'halogène, un groupe alkoxy en C₁-C₆, haloalkoxy en C₁-C₆, (alkyl en C₁-C₂)sulfinyle, (alkyl en C₁-C₂)sulfonyle, cycloalkyle en C₃-C₆, (alkoxy en C₁-C₄)carbonyle, (alkyl en C₁-C₄)-carbonyle et dans le cas de restes cycliques aussi alkyle en C₁-C₄ ou haloalkyle en C₁-C₄ ;
R¹⁰ représente un atome d'hydrogène, un groupe alkyle en C₁-C₆, alcényle en C₂-C₆, alcynyle en C₂-C₆, les trois derniers restes cités sont éventuellement substitués par un ou plusieurs substituants identiques ou différents pris dans le groupe comprenant un atome d'halogène, un groupe alkyle en C₁-C₄, alkoxy en C₁-C₄ ou (alkyl en C₁-C₄)thio, ou
R⁹ et R¹⁰ forment conjointement avec l'atome d'azote qui les porte un reste pyrrolidinyle ou pipéridinyle ;
R¹¹ représente un atome d'hydrogène, un groupe alkyle en C₁-C₄, alcényle en C₂-C₄ ou alcynyle en C₁-C₄ ;
R¹² identiques ou différents, représentent un atome d'halogène, un groupe nitro, alkyle en C₁-C₄, haloalkyle en C₁-C₄, haloalkoxy en C₁-C₄, alkoxy en C₁-C₄, cyano, (alkyl en C₁-C₄)thio, (alkyl en C₁-C₄)sulfinyle, (alkyl en C₁-C₄)sulfonyle,
m vaut 0, 1 ou 2 ;
B6) N-acylsulfamides de formule (V) et leurs sels 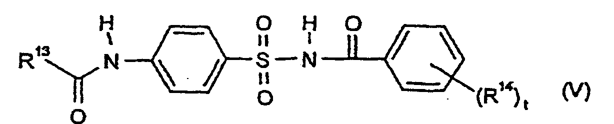 où
R¹³ représente un atome d'hydrogène, un groupe alkyle en C₁-C₆, cycloalkyle en C₃-C₆, chacun des deux derniers restes cités est non substitué ou substitué par un ou plusieurs substituants pris dans le groupe comprenant un atome d'halogène, un groupe alkoxy en C₁-C₄, haloalkoxy en C₁-C₆ et (alkyl en C₁-C₄)thio et dans le cas de restes cycliques aussi alkyle en C₁-C₄ et haloalkyle en C₁-C₄ ;
R¹⁴ représente un atome d'halogène, un groupe alkyle en C₁-C₄, haloalkyle en C₁-C₄, tel que trifluorométhyle, haloalkoxy en C₁-C₄, alkoxy en C₁-C₄ ou (alkyl en C₁-C₄)thio ;
t vaut 1 ou 2,
y compris les stéréoisomères et les sels utilisables en agriculture.

2. Agents herbicides selon la revendication 1, où
R¹ représente un groupe méthyle ;
R² représente un groupe trifluorométhyle ;
R³ représente un atome d'hydrogène ou un groupe méthyle ;
R⁴ représente un groupe méthyle ou éthyle ;
R⁵ représente un atome d'hydrogène et
n vaut 2.

3. Agent herbicide selon la revendication 1 ou 2, **caractérisé en ce que** le rapport pondéral de l'herbicide:safener est de 1:100 à 100:1.

4. Procédé pour la lutte contre les mauvaises herbes dans des cultures de plantes utiles, **caractérisé en ce qu'**on applique une quantité à efficacité herbicide d'une composition herbicidesafener selon une ou plusieurs des revendications 1 à 3 aux mauvaises herbes, aux plantes, à la semence de plantes ou à la surface de croissance des plantes.

5. Procédé selon la revendication 4, **caractérisé en ce que** les plantes sont issues du groupe comprenant le maïs, le blé, le seigle, l'orge, l'avoine, le riz, le sorgho, le coton, la canne à sucre et le soja.

6. Procédé selon la revendication 4 ou 5, **caractérisé en ce que** les plantes sont modifiées génétiquement.
